Europäisches Patentamt

European Patent Office    (11) Numéro de publication: **0 092 482**
**A1**
Office européen des brevets

(12)      ## DEMANDE DE BREVET EUROPEEN

(21) Numéro de dépôt: **83400764.3**

(51) Int. Cl.³: **F 16 K  1/48**

(22) Date de dépôt: **18.04.83**

(30) Priorité: **21.04.82  FR 8206873**

(71) Demandeur: **ST MIHIEL S.A., Rue de la Marsoupe 2, F-55300 St. Mihiel (FR)**

(43) Date de publication de la demande: **26.10.83 Bulletin 83/43**

(72) Inventeur: **Dumez, Roger Louis, 9 Faubourg Saint-Christophe, F-55300 St Mihiel (FR)**

(84) Etats contractants désignés: **AT BE CH DE GB IT LI LU NL SE**

(74) Mandataire: **Chauchard, Robert et al, c/o Cabinet Malémont 42, avenue du Président Wilson, F-75116 Paris (FR)**

(54)  **Robinet équipé d'un clapet conformable à son siège.**

(57)  La présente invention concerne un robinet dont le clapet (6) est moulé autour d'un disque annulaire (9) monté libre en rotation autour de la tige de commande (3) du robinet, entre l'extrémité libre (10) de cette dernière et une collerette (11) formée sur cette tige. Le clapet est moulé de telle façon à envelopper en même temps l'extrémité libre (10) et la collerette (11) de la tige (3).

Selon l'invention, le disque porte-clapet (9) est en outre monté à coulissement libre autour de la tige de commande (3) et s'appuie contre la collerette (11) de cette dernière, par l'intermédiaire d'au moins un élément élastique (12), logé à l'intérieur d'une cavité fermée (13) ménagée dans le clapet (6) autour de la tige de commande (3), cet élément élastique étant de préférence constitué par une rondelle-ressort.

On réalise ainsi un clapet dynamique dans lequel les forces d'écrasement sont réduites lorsqu'il est plaqué contre son siège (7).

0092482

Robinet équipé d'un clapet conformable à son siège.

La présente invention se rapporte à un robinet à clapet du type comprenant un corps sur lequel est fixée une tête dans laquelle peut être déplacée axialement une tige de commande pourvue à une extrémité d'un organe de mamoeuvre et portant libre en rotation, entre sa seconde extrémité et une collerette formée à proximité de celle-ci, un disque annulaire qui supporte un clapet en matière souple destiné à coopérer avec un siège du corps, ce clapet enveloppant en même temps ladite seconde extrémité et la collerette de la tige de commande sans être assujetti à cette dernière.

Dans les robinets connus de ce type, utilisés notamment comme robinets d'arrêt, de puissage ou d'arrosage, le clapet, généralement en caoutchouc, est moulé autour du disque porte-clapet, alors que ce dernier est en appui direct contre la collerette de la tige de commande et, de ce fait, immobilisé en translation à l'intérieur du clapet.

On réalise de la sorte un clapet dit "statique" qui, lorsqu'il est comprimé contre son siège pour obturer la veine fluide, est sujet à un écrasement excessif générateur de défauts prématurés, du genre fissurations ou déformations, qui affectent bien entendu l'efficacité en service du clapet et rendent nécessaires des remplacements fréquents de celui-ci, remplacements qui, dans le cas de clapets moulés, consistent en des échanges standard de la tige de commande.

Cet écrasement du clapet est plus spécialement préjudiciable au niveau de sa région périphérique en contact avec le siège et de sa partie qui est en portage contre le bord de l'orifice de ce dernier, zones dans lesquelles il subit des déformations importantes ainsi qu'un durcissement nuisible à son efficacité.

La présente invention se propose de remédier à ces inconvénients et, pour ce faire, elle a pour objet un robinet à clapet du type spécifié en préambule, qui se caractérise en ce que son disque porte-clapet est en outre monté à coulissement libre autour de la tige de commande et s'appuie contre la collerette de cette dernière par l'intermédiaire d'au moins un élément élastique logé à l'intérieur d'une cavité fermée ménagée dans le clapet autour de la tige de commande.

De préférence, l'élément élastique est constitué par une rondelle ressort que traverse librement la tige de commande.

Selon une autre caractéristique de l'invention qui vient en complément de la première, ladite seconde extrémité de la tige de commande coulisse étroitement à l'intérieur d'un logement adapté à sa forme, qui lorsque le clapet est en position ouverte, est dégagé sur une hauteur inférieure à la course maximum de la tige de commande à l'intérieur du clapet.

Avantageusement, ladite seconde extrémité de la tige de commande est arrondie.

Grâce à ces dispositions, on réalise un clapet que l'on peut qualifier de "dynamique" par opposition aux clapets dits "statiques" de l'art antérieur.

Dans ce clapet, l'élément élastique joue le rôle d'un amortisseur qui, lorsque le clapet est pressé contre son siège, absorbe une partie des forces d'écrasement auxquelles le clapet est soumis, ce qui a pour conséquence de réduire d'autant les risques d'apparition prématurée de défauts dans ce dernier.

En complément, lorsque le clapet, plaqué contre son siège, s'approche de sa position de fermeture complète, la seconde extrémité de la tige de commande enfonce le centre de sa surface d'appui ce qui a pour effet d'entraîner la matière constituant le clapet vers le centre siège et par la suite, d'empêcher aussi bien un évasement de la région périphèrique du clapet en contact avec le siège, qu'une déformation trop importante de sa partie en portage contre le bord de l'orifice de ce dernier. De cette façon, on élimine dans ces deux zones les causes de déformation, et de durcissement du clapet.

Un mode de réalisation de la présente invention va être décrit ci-après, à titre d'exemple non limitatif, en référence aux dessins annexés dans lesquels :

La figure 1 est une vue en coupe partielle d'un robinet à clapet conforme à l'invention.

La figure 2 est une vue du clapet du robinet de la figure 1 en position

- 3 -

0092482

ouverte, la moitié de gauche de cette figure le représentant en coupe longitudinale.

La figure 3 est une vue analogue à la figure 2 montrant le clapet en début d'appui contre son siège.

La figure 4 est une vue analogue à la figure 2 montrant le clapet dans sa position de fermeture complète.

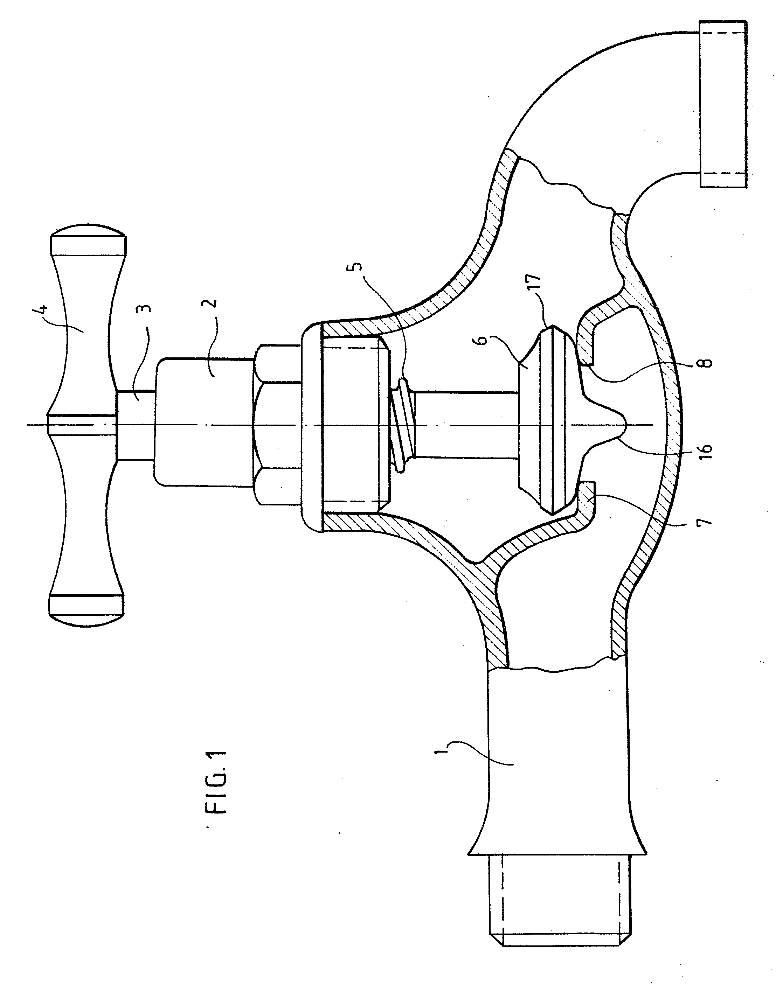

Le robinet représenté sur la figure 1 comprend tout d'abord un corps 1 de forme classique, sur lequel vient se fixer par vissage une tête 2 traversée de manière étanche par une tige de commande 3. Cette tige 3 comporte à son extrémité supérieure un organe de manoeuvre en forme de potence 4, au moyen duquel elle peut être déplacée axialement dans la tête 2, au niveau d'une partie filetée 5. A son extrémité inférieure, la tige de commande 3 porte un clapet 6 qui, grâce à ce déplacement axial, peut être plaqué contre un siège 7, aménagé à l'intérieur du corps 1, pour obturer l'orifice 8 de celui-ci par lequel passe la veine fluide.

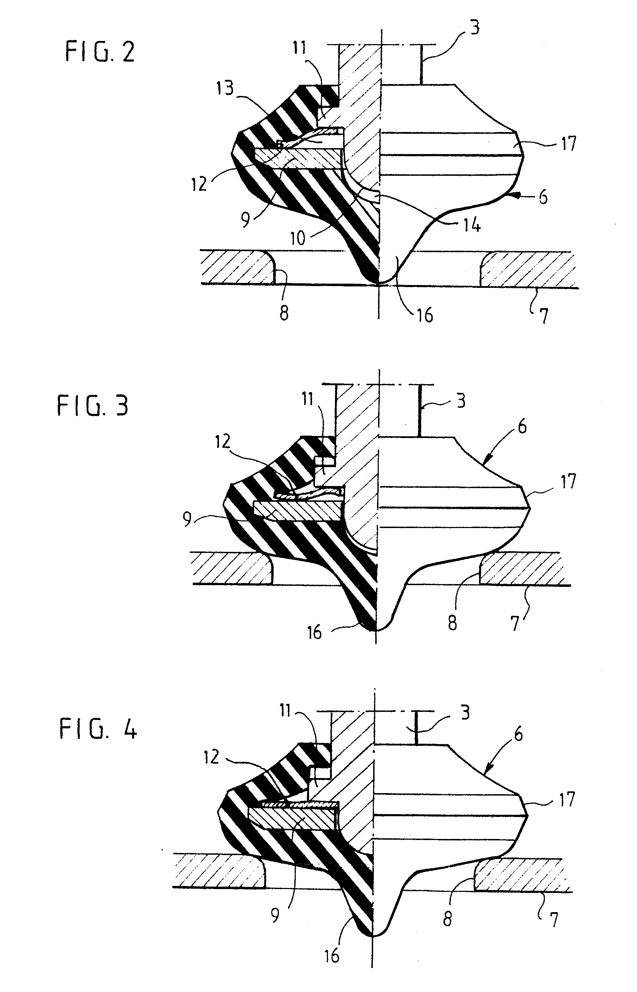

Comme on peut le voir sur la figure 2, le clapet, qui est constitué d'une matière souple telle que du caoutchouc, est supporté par un disque annulaire 9, monté libre en rotation autour de la tige 3, entre l'extrémité inférieure 10 de cette dernière et une collerette annulaire 11 formée sur cette tige.

Plus précisément, le clapet 6 qui se présente sous la forme générale d'une toupie, est moulé autour du disque porte-clapet 9 de manière à envelopper en même temps l'extrémité inférieure 10 et la collerette 11 de la tige 3. Au cours de ce moulage, un traitement supplémentaire est effectué pour que le clapet 6 n'adhère pas à la tige 3, de sorte qu'il est lui aussi porté libre en rotation par cette dernière.

Conformément à l'invention, le disque porte-clapet 9 est en outre monté à coulissement libre autour de la tige de commande 3 et un élément élastique, qui est ici une rondelle-ressort 12 de type "Belleville" qui traverse librement la tige 13, est inséré entre la collerette 11 et le disque 9. La rondelle-ressort 12 est logée à l'intérieur d'une cavité annulaire fermée 13, ménagée dans le clapet 6 autour de la tige 3. Par ailleurs, comme on peut le voir nettement sur les figures 2 à 4, l'extrémité inférieure 10 de la tige de commande 3 est arrondie et coulisse étroitement à l'intérieur d'un logement 14 adapté à sa forme.

Grâce à ces dispositions, on réalise ce qu'il est convenu d'appeler un clapet "dynamique" par opposition aux clapets "statiques" connus jusqu'à présent.

Ainsi, lorsque le clapet 6 est en position ouverte, comme représenté sur la figure 2, la rondelle-ressort 12 est complètement détendue, et tend à éloigner le disque porte-clapet 9 de la collerette 11 en le poussant en direction de l'extrémité inférieure 10 de la tige 3. Ceci a pour effet de dégager le logement 14, en dessous de l'extrémité libre 10 de la tige 3, sur une hauteur que l'on prévoit, au cours du moulage du clapet, légèrement inférieure à la course maximum de cette dernière à l'intérieur du clapet.

Puis, lorsqu'en agissant sur la tige de commande 3, on presse le clapet 6 contre son siège 7, comme représenté sur la figure 3, la rondelle-ressort 12 se comprime progressivement entre la collerette 11 et le disque 9, en absorbant en partie les forces d'écrasement exercées par le siège 7 contre la surface d'appui 15 du clapet 7. Ceci a pour conséquence que le matériau constitutif du clapet dynamique selon l'invention est en lui-même beaucoup moins sollicité, et se dégrade donc moins rapidement que dans le cas d'un clapet statique.

Lorsque le clapet 6, en appui contre le siège 7, s'approche de sa position de fermeture complète illustrée sur la figure 4, l'extrémité inférieure arrondie 10 de la tige 3 vient au contact du fond du logement 14 et presse en son centre la surface d'appui 15 du clapet 6. La matière souple constituant le clapet est par suite entraînée vers le centre du siège 7. La surface d'appui 15 du clapet 6 se conforme ainsi à son siège par déformation progressive et dynamique. On évite de cette façon un évasement vers l'extérieur de la région périphérique du clapet, et une déformation trop importante de sa partie en portage direct contre le bord de l'orifice 8 du siège 7, qui, comme on le sait, sont des causes importantes de dégradation prématurées du clapet. Il à noter ici que la forme "en toupie" du clapet contribue également à l'obtention de ce résultat. Bien entendu, au cours de la poussée exercée par l'extrémité libre de la tige 3, la rondelle-ressort 12 continue à agir sur le disque 9 et l'étanchéité entre le clapet 6 et le bord de l'orifice 8 de son siège 7 est conservée.

Le centre de la face d'appui 15 du clapet 6, sollicité par la poussée de la tige 3, constitue un point d'affaiblissement. C'est pourquoi il est renforcé par une protuberance en forme de "luette" 16 venue de matière avec le clapet. De par sa forme hydrodynamique, cette protubérance 16 permet également de réduire les turbulences et les bruits engendrés par la veine fluide qui traverse l'orifice 8 du siège 7, lorsque le clapet 6 est ouvert.

Un renforcement supplémentaire est prévu dans le clapet 6 sous la forme d'une nervure radiale 17.

On fera observer ici que le clapet de robinet qui vient d'être décrit, non seulement résiste à une dégradation prématurée mais encore, de par sa structure dynamique, permet de réduire les efforts à produire sur l'organe de manoeuvre 4 pour l'amener en position de fermeture complète.

Comme matériau constitutif de ce clapet, on choisira de préférence un caoutchouc vulcanisé de dureté moyenne comprise entre 40 et 50 DIDC.

Pour mouler ce clapet autour de l'extrémité 10 de la tige de commande 3, avant le montage de celle-ci dans le robinet, on procède de la manière suivante :

On fait reposer la tige de commande 3 sur son organe de manoeuvre 4. On place alors, sur la collerette 11 de la tige 3, la rondelle-ressort 12, sur laquelle on fait reposer le disque porte-clapet 9. On fixe ensuite, autour de l'extrémité libre de la tige 3, un moule dans lequel on injecte du caoutchouc liquide. Sous l'effet de la pression d'injection, le disque 9 et la rondelle-ressort 12 sont plaqués contre la collerette 11. Après démoulage du clapet, la rondelle-ressort amène par élasticité le disque 9 dans sa position représentée sur la figure 2. La cavité 13 est ainsi ménagée par cette simple action de la rondelle-ressort 12.

Revendications.

1. Robinet à clapet du type comprenant un corps (1) sur lequel est fixée une tête (2) dans laquelle peut être déplacée axialement une tige de commande (3) pourvue à une extrémité d'un organe de manoeuvre (4) et portant libre en rotation, entre sa seconde extrémité (10) et une collerette (11) formée à proximité de celle-ci, un disque annulaire (9) qui suppporte un clapet en matière souple (6) destiné à coopérer avec un siège (7) du corps, ce clapet enveloppant en même temps ladite seconde extrémité (10) et la collerette (11) de la tige de commande (3) sans être assujetti à cette dernière, caractérisé en ce que le disque porte-clapet (9) est en outre monté à coulissement libre autour de la tige de commande (3) et s'appuie contre la collerette (11) de cette dernière, par l'intermédiaire d'au moins un élément élastique (12), logé à l'intérieur d'une cavité fermée (13) ménagée dans le clapet (6) autour de la tige de commande (3).

2. Robinet selon la revendication 1, caractérisé en ce que l'élément élastique est constitué par une rondelle-ressort (12) que traverse librement la tige de commande (3).

3. Robinet selon la revendication 1 ou 2, caractérisé en ce que ladite seconde extrémité (10) de la tige de commande (3) coulisse étroitement à l'intérieur d'un logement (14) adapté à sa forme, qui lorsque le clapet (6) est en position ouverte, est dégagé sur une hauteur inférieure à la course maximum de la tige de commande (3) à l'intérieur du clapet (6).

4. Robinet selon l'une quelconque des revendications 1 à 3, caractérisé en ce que ladite seconde extrémité (10) de la tige de commande (3) est arrondie.

5. Robinet selon l'une quelconque des revendications 1 à 4, caractérisé en ce que le centre de la face d'appui (15) du clapet (6) est renforcé par une protubérance (16) venue de matière avec le clapet.

6. Robinet selon l'une quelconque des revendications 1 à 5, caractérisé en ce que le clapet (6) comporte une nervure de renforcement radiale (17).

7. Robinet selon l'une quelconque des revendications 1 à 6, caractérisé en ce que le clapet (6) se présente sensiblement sous la forme d'une toupie.

FIG. 1

FIG. 2

FIG. 3

FIG. 4

Office européen
des brevets

## RAPPORT DE RECHERCHE EUROPEENNE

Numéro de la demande

EP 83 40 0764

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 310 277 (DANFOSS A/S) * Revendication 1 * | 1 | F 16 K 1/48 |
| | --- | | |
| A | US-A-4 142 543 (HENRY VALVE CO.) | | |
| | --- | | |
| A | US-A-3 276 741 (DANFOSS) | | |
| | --- | | |
| A | DE-A-2 443 298 (HERION-WERKE K.G.) | | |
| | --- | | |
| A | GB-A-1 064 868 (SARCO CO.) | | |
| | ----- | | |

| | DOMAINES TECHNIQUES RECHERCHES (Int. Cl. ³) |
|---|---|
| | F 16 K 1/00 |

Le présent rapport de recherche a été établi pour toutes les revendications

| Lieu de la recherche | Date d'achèvement de la recherche | Examinateur |
|---|---|---|
| LA HAYE | 12-07-1983 | DE SMET F.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82